# EUROPÄISCHE PATENTSCHRIFT

(11) **EP 2 771 228 B1**
(45) Veröffentlichungstag und Bekanntmachung des Hinweises auf die Patenterteilung: **04.11.2015**
(21) Anmeldenummer: 12759070.1
(22) Anmeldetag: 04.09.2012
(51) Int. Cl.: B62D 21/11, B62D 27/06, B62D 29/04

(54) **ACHSTRÄGER EINES FAHRZEUGS AUS FASERVERSTÄRKTEM KUNSTSTOFFMATERIAL**
AXLE SUPPORT OF A VEHICLE, SAID SUPPORT CONSISTING OF FIBER-REINFORCED PLASTIC MATERIAL
TRAVERSE DE CHÂSSIS D'UN VÉHICULE CONSTITUÉE D'UN MATÉRIAU PLASTIQUE RENFORCÉ PAR DES FIBRES

(30) Priorität: 28.10.2011 DE 102011085383
(43) Veröffentlichungstag der Anmeldung: 03.09.2014
(73) Patentinhaber: Bayerische Motoren Werke Aktiengesellschaft, 80809 München (DE)
(72) Erfinder: RENNER, Marco, 08485 Lengenfeld (DE); LAILACH, Nino, 80638 Muenchen (DE)
(86) Internationale Anmeldenummer: PCT/EP2012/067170
(87) Internationale Veröffentlichungsnummer: WO 2013/060514

(56) Entgegenhaltungen:
- EP-A2- 2 527 231
- WO-A1-2011/141538
- DE-A1-102006 017 225
- DE-A1-102009 021 964
- DE-A1-102009 031 838

## Beschreibung

Die Erfindung betrifft einen Achsträger eines Fahrzeugs, insbesondere eines Personenkraftwagens, bestehend aus einer jeweils aus faserverstärktem, insbesondere kohlefaserverstärktem Kunststoffmaterial geformten Oberschale und Unterschale, die zusammengesetzt einen Hohlkörper bilden. Zum Stand der Technik wird neben der EP 1 609 704 B1 und der WO00/66417 insbesondere auf die DE 10 2009 031 838 A1 verwiesen. Als nachveröffentlichter Stand der Technik können ferner die EP 2 527 231 A2 und die gattungsgemäße WO 2011/141538 A1 genannt werden.

In der erstgenannten Schrift ist ein Achsträger nach dem Oberbegriff des Anspruchs 1 in Form eines Fahrgestells eines Lastkraftwagens beschrieben, bei welchem die Oberschale und die Unterschale stoffschlüssig durch Verschmelzung, Verklebung oder Verschweißung miteinander verbunden sind. In der zweitgenannten Schrift ist ein dort sog. Radsupport für Fahrzeuge beschrieben, bei welchem es sich auch um einen Achsträger handeln kann, der aus Trägerprofilen aus faserverstärktem Kunststoff aufgebaut ist, wobei in den Kunststoff der Trägerprofile metallische Verbindungsanbauteile einlaminiert oder eingegossen sind. Schließlich beschreibt die drittgenannte DE 10 2009 031 838 A1 ein Trägerteil für eine Kraftwagenkarosserie mit einem ersten und einem zweiten Bauteil jeweils aus einem Faserverbundwerkstoff, welche miteinander verklebt und zusätzlich durch zumindest ein mechanisches Fügeelement miteinander verbunden sind.

Vorliegend soll aufgezeigt werden, wie die Festigkeit eines Achsträgers nach dem Oberbegriff des Anspruchs 1, der weiterhin einlaminierte metallische Einlegteile aufweist, weiter gesteigert werden kann (= Aufgabe der vorliegenden Erfindung).

Die Lösung dieser Aufgabe ist dadurch gekennzeichnet, dass die Oberschale und die Unterschale über in diese Schalen-Teile zumindest abschnittsweise einlaminierte metallische Einlegeteile miteinander verschraubt sind. Vorteilhafte Weiterbildungen sind Inhalt der Unteransprüche.

Vorzugsweise sind die Oberschale und die Unterschale, von denen eine ihrerseits mehrteilig (mehrstückig) ausgebildet sein kann, aus mehreren Lagen von faserverstärkten Vorformlingen (Prepregs) aufgebaut, so dass metallische Einlegeteile einfach in die jeweilige Schale zwischen zwei aufeinander liegenden Vorformlingen einlaminiert werden können. Dies ist soweit Stand der Technik. Nun wird vorgeschlagen, quasi über diese Einlegeteile die beiden Schalen miteinander zu verschrauben, da die damit verbundenen Spannkräfte über die Einlegeteile der Schalen bestmöglich in die Oberschale und in die Unterschale eingeleitet bzw. in diesen großflächig verteilt werden können. Eine erfindungsgemäß vorgesehene Verschraubung ist gegebenenfalls einfacher darstellbar als eine in einer aufwändig verlaufenden Trennfuge zwischen den beiden Schalen verlaufende Verklebung oder Verschweißung und ist insbesondere auch für eine gegebenenfalls erforderliche Reparatur besonders vorteilhaft, indem dann nicht der vollständige Achsträger sondern nur eine bzw. die defekte Schale ausgetauscht werden muss. Besonders voreilhaft ist es jedoch, wenn ein solches Einlegeteil zur Anbindung eines Anbauteils, so beispielsweise eines radführenden Lenkers oder eines Querstabilisators oder eines Achsgetriebes, ausgebildet ist. Mit der gleichen Verschraubung, mit der die Oberschale über deren Einlegeteil mit der Unterschale, genauer mit deren Einlegteil verbunden ist, kann dann auch ein (beliebiges) Anbauteil am erfindungsgemäßen Achsträger befestigt werden oder sein. Dabei kann an das Einlegeteil bereits ein entsprechender Lagerbock zur Aufnahme eines Anbauteils angeformt sein, wobei eine Durchgangsbohrung im Einlegeteil vorgesehen sein kann, durch die eine Schraube oder dergleichen hindurch gesteckt werden kann, die sich dann an diesem Einlegeteil abstützt. Es ist aber auch möglich, dass das Einlegeteil im wesentlichen als Schraubenbolzen oder als Schraubenmutter fungiert, auf den entweder eine Schraubenmutter aufgebracht oder in die ein Schraubenbolzen eingedreht werden kann.

Indem nun wie vorgeschlagen quasi einander gegenüberliegend in der Oberschale und in der Unterschale jeweils ein solches geeignet gestaltetes Einlegeteil vorgesehen ist, können also die Oberschale und die Unterschale miteinander verschraubt, d.h. über eine Schraubverbindung quasi gegeneinander verspannt werden, wobei die entsprechende Schraube ausdrücklich ein eigenständiges Bauelement sein kann, das bzw. die sich an einem ersten Einlegeteil (bspw. der Oberschale) abstützt und in ein zweites Einlegeteil (bspw. der Unterschale) eingeschraubt ist. Zur weiteren Steigerung der Festigkeit eines erfindungsgemäßen Achsträgers können die Oberschale und die Unterschale bzw. ggf. vorgesehene Schalen-Einzelteile zusätzlich miteinander verklebt oder in sonstiger Weise stoffschlüssig miteinander verbunden (bspw. verschweißt) sein; dies ist vorzugsweise längs der jeweiligen Trennfugen zwischen den Bauteilen vorgesehen. Die erfindungsgemäße zusätzliche Verschraubung erhöht dann die Festigkeit bzw. Steifigkeit eines erfindungsgemäßen Achsträgers.

Zur weiteren Festigkeitserhöhung und um lokales Ausbeulen oder Einbeulen durch auftretende Schubspannungen zu verhindern, kann im Hohlraum zwischen der Oberschale und der Unterschale zumindest bereichsweise und vorzugsweise im Bereich einander gegenüberliegender metallischer Einlegeteile ein vorgefertigtes Kernteil, insbesondere aus einem Kunststoff-Schaum gebildet, zur großflächigen Übertragung von Schubspannungen eingeklebt sein. Die erfindungsgemäße Schraubverbindung kann dann durch dieses Kernteil hindurch gehen.

In der beigefügten **Fig.1** ist ein erfindungsgemäßer Achsträger für die Hinterachse eines Personenkraftwagens von oben betrachtet räumlich dargestellt, während **Fig.2** eine Seitenansicht und **Fig.3** eine räumliche Ansicht auf die Unterseite dieses Achsträgers zeigt.

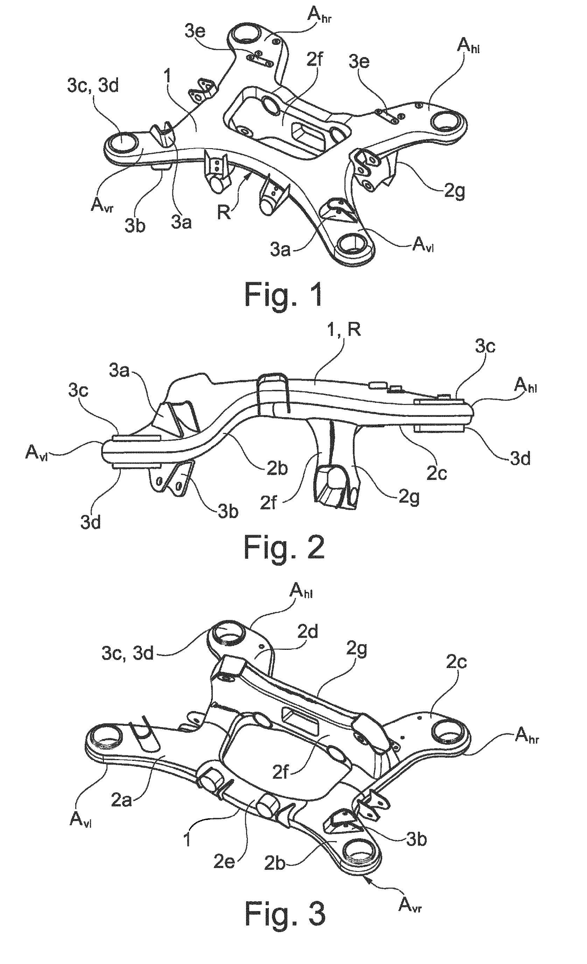

Dabei ist mit der Bezugsziffer 1 eine sog. Oberschale des Achsträgers gekennzeichnet, während mehrere Unterschalen-Einzelteile die Bezugsziffern 2a, 2b, 2c, 2d, 2e, 2f, 2g tragen und im zusammengesetzten, d.h. mit der Oberschale 1 verbundenen Zustand eine Unterschale 2 bilden. In diesem zusammengesetzten Zustand bilden die Oberschale 1 und die Unterschale 2 dann im wesentlichen einen Hohlkörper in der Form eines üblichen Achsträgers, der wie ersichtlich vorliegend in geometrischer Betrachtungsweise im wesentlichen aus einem rechteckigen Rahmen R und vier von den Ecken dieses Rahmens R annähernd in Diagonalrichtung nach außen abragenden Armen Aᵥₗ, Aᵥᵣ, Aₕᵣ, Aₕₗ besteht. In der Buchstaben-Bezeichnung für die Arme A_{xy} steht dabei jeweils in Fahrtrichtung eines mit diesem Hinter-Achsträger ausgerüsteten Fahrzeugs betrachtet der erste Index v für "vorne" und h für "hinten", während der zweite Index r für "rechts" und I für "links" steht. Wie Figur 2 zeigt liegen dabei die hinteren Arme A_{hy} im wesentlichen in der gleichen Ebene wie der Rahmen R, während die vorderen Arme A_{vy} quasi aus der Ebene des Rahmens R nach unten herausragen. Ferner sind wie ersichtlich die mit der hinteren in FahrzeugQuerrichtung verlaufenden Oberschalen-Rahmen-Kante zusammenwirkenden bzw. diese ergänzenden Unterschalen-Einzelteile 2f und 2g so geformt, das diese zusätzlich eine Querbrücke bilden, die ihrerseits durch zwei sich zu dieser Querbrücke ergänzende Schalenteile, nämlich durch die Unterschalen-Einzelteile 2f und 2g, gebildet ist.

Neben den soweit genannten Bauelementen besitzt der Achsträger 1 weitere Bauelemente, die durch Einlegeteile 3x (mit x = a, b, c, .....) in der Oberschale 1 oder in einem der Unterschalen-Einzelteile 2a - 2d gebildet sind und denen bestimmte Funktionen zugeordnet sind. Diese Einlegeteile 3x sind durchweg aus einem metallischen Werkstoff geformt und in die Oberschale 1 oder das jeweilige Unterschalen-Einzelteil 2y (y = a - d) eingeformt. Die Oberschale 1 und die Unterschalen-Einzelteile 2y sind nämlich aus einem kohlefaserverstärktem Kunststoffmaterial geformt, bei dessen Herstellung in bekannter Weise die Einlegeteile 3x eingeformt, d.h. mit einem Teilbereich des jeweiligen Einlegeteils 3x einlaminiert sind. Über jedes Einlegeteil 3x, welches mit seinem soeben genannten flächigen und dabei relativ kleinen und in den Figurendarstellungen nicht sichtbaren Teilbereich in das flächige Kunststoffmaterial der Oberschale 1 bzw. des jeweiligen Unterschalen-Einzelteils 2y einlaminiert ist, können vom jeweiligen Einlegeteil 3x aufgenommene Kräfte großflächig in das Kunststoffmaterial der Oberschale 1 bzw. des Unterschalen-Einzelteiles 2y übertragen werden.

Stellvertretend für die Vielzahl der vorgesehenen Einlegteile 3x sei nun auf die Einlegteile 3a, 3b eingegangen, wobei sich das Einlegteil 3a im Arm Aᵥᵣ der Oberschale 1 befindet und wie ersichtlich einen Lagerbock bildet, an dem ein am Achsträger zu befestigendes figürlich nicht dargestelltes Anbauteil, hier ein radführender Lenker, befestigt werden kann. In Vertikalrichtung betrachtet im wesentlichen direkt unterhalb dieses Einlegteils 3a ist im diesen Arm Aᵥᵣ mit bildenden Unterschalen-Einzelteil 2b ein weiteres einen solchen Lagerbock bildendes Einlegteil 3b vorgesehen. Über diese beiden Einlegteile 3a, 3b ist nun das Unterschalen-Einzelteil 2b mit der Oberschale 1 verschraubt, indem eine figürlich nicht dargestellte Verbindungsschraube (mit Mutter oder Gegengewinde in einem der Einlegeteile 3a, 3b) oder eine Gewinde-Spannbolzen-Verbindung bspw. mit von außen aufgebrachten Muttern diese beiden Einlegeteile 3a, 3b gegeneinander und somit auch das Unterschalen-Einzelteil 2b gegen die Oberschale 1 verspannt. Eine gleiche Anordnung findet sich am Arm Aᵥₗ.

Weiterhin miteinander verbunden sind die Oberschale 1 und das jeweilige Unterschalen-Einzelteil 2y im freien Endabschnitt jedes Armes A_{xy} über abschnittsweise einlaminierte metallische Einlegeteile 3c, 3d, die zusammengesetzt wie dargestellt jeweils eine Aufnahme für ein Lager bilden, über das der Achsträger am Unterboden eines Fahrzeugs gelagert bzw. befestigt wird. Weiterhin miteinander verbunden sind die Oberschale 1 und das jeweilige Unterschalen-Einzelteil 2y ferner im Bereich der durch die Unterschalen-Einzelteile 2g und 2f gebildeten Querbrücke, wobei für diese Verbindung in der Oberschale 1 bzw. in deren Armen Aₕₗ, Aₕᵣ Einlegeteile 3e vorgesehen sind, die quasi als Muttern fungieren, in die nicht dargestellte Schrauben von der besagten Querbrücke (gebildet durch die Unterschalen-Einzelteile 2f, 2g) ausgehend eingeschraubt sind.

Auch weitere vorgesehene Einlegeteile (3) können einer Schraubverbindung zwischen der Oberschale 1 und einem jeweiligen Unterschalen-Einzelteil 2y dienen. Da dies auf der bislang beschriebenen Art vergleichbare Weise vorgesehen ist, wird hierauf nicht näher eingegangen. Vielmehr sei noch erläutert, dass im von der Oberschale 1 und der Unterschale 2 bzw. dem jeweiligen Unterschalen-Einzelteil 2y gebildeten Hohlraum, der abschnittsweise abgeschlossen sein kann, jedoch nicht zwangsweise geschlossen sein muss, ein in den Figuren nicht sichtbares Kernteil, welches vorzugsweise aus einem Kunststoffschaum gebildet ist, eingesetzt und insbesondere eingeklebt sein kann. Vorzugsweise sind solche Kernteile, die jeweils für sich betrachtet keineswegs den besagten Hohlraum vollständig ausfüllen müssen, in solchen Bereichen oder Abschnitten vorgesehen, in denen die Oberschale 1 und das jeweilige Unterschalen-Einzelteil 2y über eine Schraubverbindung mit Einlegeteilen (3) miteinander verbunden sind. Indem dort das jeweilige Kernteil zwischen der Oberschale 1 und dem jeweiligen Unterschalen-Einzelteil 2y quasi eingespannt ist, erhöht dieses die Stabilität und Festigkeit des Achsträgers signifikant. Schließlich sein noch darauf hingewiesen, dass eine Vielzahl von Details durchaus abweichend von obigen Erläuterungen gestaltet sein kann, ohne den Inhalt der Patentansprüche zu verlassen.

## Patentansprüche

1. Achsträger eines Fahrzeugs, insbesondere eines Personenkraftwagens, bestehend aus einer jeweils aus faserverstärktem, insbesondere kohlefaserverstärktem Kunststoffmaterial geformten Oberschale (1) und Unterschale (2), die zusammengesetzt einen Hohlkörper bilden, **dadurch gekennzeichnet, dass** die Oberschale (1) und Unterschale (2) über in diese Schalen-Teile zumindest abschnittsweise einlaminierte metallische Einlegeteile (3) miteinander verschraubt sind.

2. Achsträger nach Anspruch 1, **dadurch gekennzeichnet, dass** im Hohlraum zwischen Oberschale (1) und Unterschale (2) zumindest bereichsweise und vorzugsweise im Bereich einander gegenüberliegender metallischer Einlegteile (3) ein Kernteil, insbesondere aus einem Kunststoff-Schaum gebildet, eingeklebt ist.

3. Achsträger nach Anspruch 1 oder 2, **dadurch gekennzeichnet, dass** zumindest eines der Einlegteile (3x) gleichzeitig zur Anbindung eines Anbauteiles ausgebildet ist.

4. Achsträger nach einem der vorangegangenen Ansprüche, **dadurch gekennzeichnet, dass** eine der beiden Schalen durch mehrere Schalen-Einzelteile (2y) gebildet ist.

5. Achsträger nach einem der vorangegangenen Ansprüche, **dadurch gekennzeichnet, dass** die Schalen-Teile (1, 2) oder Schalen-Einzelteile (2y) zusätzlich stoffschlüssig miteinander verbunden sind.

## Claims

1. An axle support of a vehicle, more especially a passenger vehicle, comprising an upper shell (1) and a lower shell (2), each of which is formed from a fibre-reinforced, more especially carbon fibre-reinforced, plastics material, which shells form a hollow body when assembled, **characterised in that** the upper shell (1) and lower shell (2) are screwed together by metallic insert parts (3) laminated, at least in portions, into these shell parts.

2. An axle support according to claim 1, **characterised in that** a core part, more especially formed from a plastics material foam, is glued in the hollow space between the upper shell (1) and lower shell (2), at least in regions, and preferably in the region of mutually opposing metallic insert parts (3).

3. An axle support according to claim 1 or 2, **characterised in that** at least one of the insert parts (3x) is simultaneously configured to connect an add-on part.

4. An axle support according to any one of the preceding claims, **characterised in that** one of the two shells is formed by a plurality of individual shell parts (2y).

5. An axle support according to any one of the preceding claims, **characterised in that** the shell parts (1, 2) or individual shell parts (2y) are additionally connected to one another by a material bond.

## Revendications

1. Support d'essieu d'un véhicule, en particulier d'une voiture de tourisme constituée par une coque supérieure respectivement moulée en un matériau synthétique renforcé par des fibres, en particulier par des fibres de carbone (1) et par une coque inférieure (2) qui, en étant rassemblées forment un corps creux, **caractérisé en ce que** la coque supérieure (1) et la coque inférieure (2) sont vissées l'une à l'autre par l'intermédiaire de parties d'insertion métalliques (3) laminées au moins par zone dans ces parties de coque.

2. Support d'essieu conforme à la revendication 1,
**caractérisé en ce que**
dans la cavité située entre la coque supérieure (1) et la coque inférieure (2) est collée une partie de noyau en particulier formée d'une mousse synthétique au moins par zone et de préférence dans la zone des parties d'insertion métalliques (3) opposées.

3. Support d'essieu conforme à la revendication 1 ou 2,
**caractérisé en ce qu'**
au moins l'un des éléments d'insertion (3x) est simultanément réalisé pour permettre la liaison d'un composant.

4. Support d'essieu conforme à l'une des revendications précédentes,
**caractérisé en ce qu'**
une des deux coques est formée par plusieurs éléments de coque individuels (2y).

5. Support d'essieu conforme à l'une des revendications précédentes,
**caractérisé en ce que**
les éléments de coque (1, 2) ou les éléments de coque individuels (2y) sont en outre reliés entre eux par une liaison par la matière.
